# EUROPÄISCHE PATENTANMELDUNG

(11) **EP 2 876 381 A1**
(43) Veröffentlichungstag der Anmeldung: **27.05.2015**
(21) Anmeldenummer: 14190411.0
(22) Anmeldetag: 27.10.2014
(51) Int. Cl.: F24H 9/20, G01D 11/24, G01D 11/30

(54) **Positionsüberwachung eines Sensors**

(30) Priorität: 21.11.2013 AT 9002013
(71) Anmelder: Vaillant GmbH, 42859 Remscheid (DE)
(72) Erfinder: Ruthenberg, Christian, 42399 Wuppertal (DE); Stefan Bott, Stefan, 40625 Düsseldorf (DE); Severin, Sascha, 44791 Bochum (DE); Penndu, Cécile, 44300 Nantes (FR)
(74) Vertreter: Hocker, Thomas

(57) **Zusammenfassung**

Die vorliegende Erfindung betrifft einen Sensor (1) mit korrespondierender Sensorhalterung (2), wobei der Sensor (1) über einen Kontaktschalter (3) oder Kontrollsensor verfügt oder mit diesem verbunden ist, die Innenkontur der Sensorhalterung (2) zumindest annähernd der Außenkontur des mit dem Kontaktschalter (3) oder Kontrollsensor verbundenen Sensors (1) entspricht, wobei der Kontaktschalter (3) geöffnet ist, wenn der Sensor (1) mit dem Kontaktschalter (3) außerhalb der Sensorhalterung (2) positioniert ist und geschlossen ist, wenn der Sensor (1) (1) mit dem Kontaktschalter (3) innerhalb der Sensorhalterung (2) positioniert ist, oder der Kontaktschalter (3) geschlossen ist, wenn der Sensor (1) mit dem Kontaktschalter (3) außerhalb der Sensorhalterung (2) positioniert ist und geöffnet ist, wenn der Sensor (1) mit dem Kontaktschalter (3) innerhalb der Sensorhalterung (2) positioniert ist oder der Kontrollsensor innerhalb der Sensorhalterung (2) einen Messwert charakteristisch verändert.

## Beschreibung

Die Erfindung betrifft eine Überwachungseinrichtung bezüglich der Positionierung eines Sensors.

Gemäß dem Stand der Technik besteht bei einer Sensorinstallation das Problem, dass häufig eine falsche Position des Sensors nicht festgestellt wird und somit der Sensor nicht dort misst, wo eine Messgröße überwacht werden soll.

So werden beispielsweise in Warmwasserspeichern Temperatursensoren in Tauchrohren installiert, um an einem bestimmten Punkt im Warmwasserspeicher die Temperatur zu erfassen. Wird der Sensor zwar an eine Regelung angeschlossen, aber nicht in das Tauchrohr eingeschoben, so misst er eine falsche Temperatur. Gleiches gilt, wenn er bei Wartungsarbeiten aus Versehen aus dem Tauchrohr gezogen wird. Die Regelung steuert dann die Warmwasserbereitung nach einer falschen Temperaturvorgabe.

Gemäß dem Stand der Technik ist dieses Problem durch einen Regelalgorithmus überprüfbar, wenn bei bestimmten Vorgängen überprüft wird, ob die Messgröße sich erwartungsgemäß verändert. Wird beispielsweise oben genannter Warmwasserspeicher erhitzt, so muss die Temperatur im Warmwasserspeicher - zumindest wenn gleichzeitig keine Warmwasserzapfung stattfindet - steigen. Ist dies nicht der Fall, so ist dies ein Indiz für eine Sensorfehlfunktion.

Aufgabe der vorliegenden Erfindung ist es, eine falsche Positionierung eines Sensors frühzeitig zu erkennen, so dass bereits vor der Inbetriebnahme eines diesen Sensor verwendenden Gerätes der Fehler bekannt ist.

Erfindungsgemäß wird obige Aufgabe durch die Merkmale des kennzeichnenden Teils des Anspruchs 1 gelöst. Ein erfindungsgemäßer Sensor benötigt hierfür eine korrespondierende Sensorhalterung. Ferner verfügt der Sensor über einen Kontaktschalter oder Kontrollsensor. Ist der Sensor an seiner Sollposition, so ist der Kontaktschalter oder Kontrollsensor in einer bestimmten Stellung beziehungsweise liefert einen vorgegebenen Sollwert. Hierbei kann ein Kontaktschalter in der Sensorhalterung geöffnet oder geschlossen werden. Alternativ kann ein Sensor einen bestimmten Wert in einem Sollbereich liefern.

Weitere vorteilhafte Ausgestaltungen ergeben sich aus den Unteransprüchen.

So kann der Kontaktschalter ein Taster oder Magnetschalter sein, welcher innerhalb der Sensorhalterung geöffnet oder geschlossen wird. Ist der Kontaktschalter ein kapazitiver Sensor, so ändert er innerhalb der Sensorhalterung seine Kapazität.

Sind der Sensor und der Kontaktschalter seriell geschaltet, so wird kein zusätzliches Kabel benötigt. Die Unterbrechung des Sensorsignals führt zu einer Fehlermeldung, bei der neben einer Fehlfunktion des eigentlichen Sensors auch eine Fehlposition ursächlich sein kann.

Beim erfindungsgemäßen Verfahren zur Positionsüberprüfung des Sensors mit korrespondierender Sensorhalterung wird der Kontaktschalter oder Kontrollsensor mit der Regelung verbunden. In dem Fall, in dem das Sensorsignal keinen Sollwert annimmt oder sich außerhalb eines Sollbereich aufhält, wird eine Fehlermeldung ausgegeben. Sind der Sensor und der Kontaktschalter oder Kontrollsensor seriell geschaltet, so wird, wenn kein Signal vorliegt, auf einen entsprechenden Fehler geschlossen.

Die Erfindung wird anhand der Figuren detailliert erläutert. Die Zeichnungen zeigen:
Fig. 1 einen erfindungsgemäßen Sensor mit korrespondierender Sensorhalterung, wobei der Sensor sich nicht in der Sollposition befindet und
Fig. 2 denselben erfindungsgemäßen Sensor mit korrespondierender Sensorhalterung, wobei der Sensor sich in der Sollposition befindet.

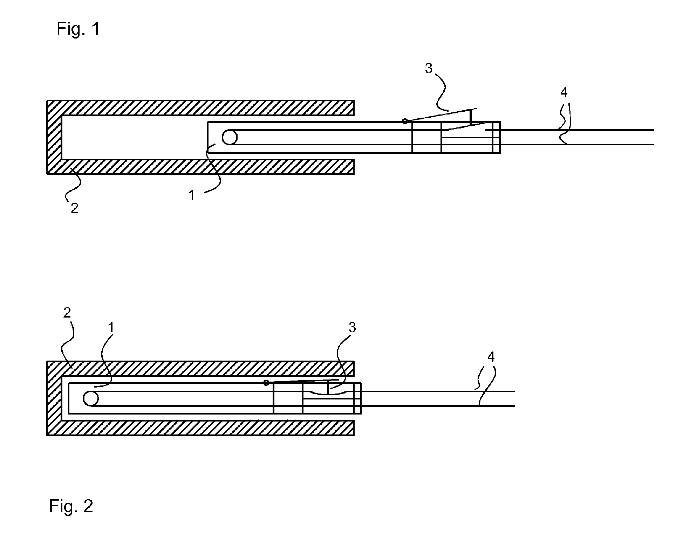

Figur 1 zeigt einen Sensor 1 der fest mit einem Kontaktschalter 3 verbunden ist. Bei dem Kontaktschalter 3 handelt es sich in diesem Fall um einen Taster mit Feder. Die Feder drückt den Taster auf; Druck auf den Taster führt zu einem Schließen des Kontaktschalters 3. Sensor 1 und Kontaktschalter 3 sind seriell in Reihe geschaltet mit einer Leitung 4 verbunden. Ferner zeigt Figur 1 eine Sensorhalterung 2. Die Innenkontur der Sensorhalterung 2 entspricht zumindest annähernd der Außenkontur des mit dem Kontaktschalter 3 verbundenen Sensor 1. Hierbei sind die Konturen derart ausgebildet, dass der mit dem Kontaktschalter 3 verbundene Sensor 1 in die Sensorhalterung 2 eingeschoben und wieder herausgenommen werden kann. Im Ausführungsbeispiel sind beide Konturen zylindrisch; im allgemeinen bietet sich eine geradlinige Erstreckungsform an.

In Figur 1 befindet sich der Sensor 1 nicht in der Sollposition in der Sensorhalterung 2, so dass der Kontaktschalter 3 sich nicht innerhalb der Sensorhalterung 2 befindet und geöffnet ist.

Figur 2 zeigt denselben Sensor 1 mit derselben korrespondieren Sensorhalterung 2, wobei sich der Sensor 1 diesmal in der Sollposition in der Sensorhalterung 2 befindet, so dass auch der Kontaktschalter 3 sich innerhalb der Sensorhalterung 2 befindet. Die Sensorhalterung 2 drückt auf den Kontaktschalter 3 und schließt somit den Kontakt. Das Kabel 4 wird elektrisch durch den Kontaktschalter 3 sowie den Sensor 1 durchströmt, so dass an einer nicht dargestellten Regelung, die mit dem Sensor 1 verbunden ist, ein Sensorsignal ausgewertet werden kann.

Der Kontaktschalter 3 sollte möglichst, so wie im Ausführungsbeispiel dargestellt, derartig mit dem Sensorhalter 2 korrespondieren, dass erst die richtige Endposition den Kontaktschalter 3 schließt. Demzufolge ist im vorliegenden Fall der Kontaktschalter 3 so mit dem Sensor 1 verbunden, dass sich der Kontaktschalter 3 in der Sollposition am Ende der Sensorhalterung 2 befindet und bereits bei leichtem Verschieben der Kontaktschalter 3 sich außerhalb der Sensorhalterung 2 befindet.

Bei dem erfindungsgemäßen Verfahren zur Positionsüberprüfung des Sensors 1 mit korrespondierender Sensorhalterung 2 in einem nicht dargestellten Gerät mit einer nicht dargestellten Regelung wird das Sensorsignal ausgewertet. Bei einer Anordnung gemäß den Figuren 1 und 2 würde die Regelung feststellen, wenn kein Sensorsignal vorliegt und ein entsprechendes Fehlersignal ausgeben.

Alternativ kann der Kontaktschalter 3 auch über ein eigenes Kabel verfügen. In diesem Fall kann der Taster auch ein Öffnen beim Einschieben in die Sensorhalterung bewirken, so dass die Unterbrechung eines elektrischen Stromflusses ein Zeichen für mangelhaften Einbau ist.

Statt eines Kontaktschalters 3 in Form eines Tasters mit Feder kann auch ein Magnetschalter, welcher innerhalb einer magnetischen Sensorhalterung 2 geöffnet oder geschlossen wird, verwendet werden. Auch ein Kontaktsensor in Form eines kapazitiven Sensors, welcher innerhalb der Sensorhalterung 2 seine Kapazität ändert, kann ein entsprechendes Signal liefern. In dem Fall, in dem das Sensorsignal des kapazitiven Sensors keinen Sollwert annimmt oder sich außerhalb eines Sollbereich aufhält, wird eine Fehlermeldung ausgegeben.

## Patentansprüche

1. Sensor (1) mit korrespondierender Sensorhalterung (2), **dadurch gekennzeichnet, dass** der Sensor (1) über einen Kontaktschalter (3) oder Kontrollsensor verfügt oder mit diesem verbunden ist,
die Innenkontur der Sensorhalterung (2) zumindest annähernd der Außenkontur des mit dem Kontaktschalter (3) oder Kontrollsensor verbundenen Sensors (1) entspricht, wobei der Kontaktschalter (3) geöffnet ist, wenn der Sensor (1) mit dem Kontaktschalter (3) außerhalb der Sensorhalterung (2) positioniert ist und geschlossen ist, wenn der Sensor (1) (1) mit dem Kontaktschalter (3) innerhalb der Sensorhalterung (2) positioniert ist,
oder der Kontaktschalter (3) geschlossen ist, wenn der Sensor (1) mit dem Kontaktschalter (3) außerhalb der Sensorhalterung (2) positioniert ist und geöffnet ist, wenn der Sensor (1) mit dem Kontaktschalter (3) innerhalb der Sensorhalterung (2) positioniert ist
oder der Kontrollsensor innerhalb der Sensorhalterung (2) einen Messwert charakteristisch verändert.

2. Sensor (1) mit korrespondierender Sensorhalterung (2) nach Anspruch 1, **dadurch gekennzeichnet, dass** der Kontaktschalter (3) ein Taster ist, welcher innerhalb der Sensorhalterung (2) geöffnet oder geschlossen wird.

3. Sensor (1) mit korrespondierender Sensorhalterung (2) nach Anspruch 1, **dadurch gekennzeichnet, dass** der Kontaktschalter ein Magnetschalter ist, welcher innerhalb einer magnetischen Sensorhalterung (2) geöffnet oder geschlossen wird.

4. Sensor (1) mit korrespondierender Sensorhalterung (2) nach Anspruch 1, **dadurch gekennzeichnet, dass** der Kontaktsensor ein kapazitiver Sensor ist, welcher innerhalb der Sensorhalterung (2) seine Kapazität ändert.

5. Sensor (1) mit korrespondierender Sensorhalterung (2) nach einem der Ansprüche 1 bis 4, **dadurch gekennzeichnet, dass** der Sensor (1) und der Kontaktschalter (3) oder Kontaktsensor seriell geschaltet sind.

6. Verfahren zur Positionsüberprüfung eines Sensors (1) mit korrespondierender Sensorhalterung (2) nach einem der Ansprüche 1 bis 5 in einem Gerät mit Regelung, **dadurch gekennzeichnet, dass** der Kontaktschalter (3) oder Kontrollsensor mit der Regelung verbunden ist und in dem Fall, in dem das Sensorsignal keinen Sollwert annimmt oder sich außerhalb eines Sollbereich aufhält, eine Fehlermeldung ausgegeben wird.

7. Verfahren zur Positionsüberprüfung eines Sensors (1) mit korrespondierender Sensorhalterung (2) gemäß Anspruch 5 nach Anspruch 6, **dadurch gekennzeichnet, dass** in dem Fall, in dem kein Sensorsignal vorliegt, eine Fehlermeldung ausgegeben wird.
